# EUROPÄISCHE PATENTSCHRIFT

(11) **EP 1 550 137 B1**
(45) Veröffentlichungstag und Bekanntmachung des Hinweises auf die Patenterteilung: **18.03.2009**
(21) Anmeldenummer: 03807797.0
(22) Anmeldetag: 20.08.2003
(51) Int. Cl.: G21C 3/332

(54) **BRENNELEMENT EINES SIEDEWASSERREAKTORS**
FUEL ASSEMBLY FOR BOILING WATER REACTOR
ELEMENT COMBUSTIBLE POUR REACTEUR EAU BOUILLANTE

(30) Priorität: 01.10.2002 DE 10246131
(43) Veröffentlichungstag der Anmeldung: 06.07.2005
(73) Patentinhaber: AREVA NP GmbH, 91052 Erlangen (DE)
(72) Erfinder: BUCHEIT, Peter, 91074 Herzogenaurach (DE); RUDOLPH, Matthias, D-91085 Weisendorf (DE); FUCHS, Hans-Peter, D-90409 Nürnberg (DE)
(74) Vertreter: Mörtel & Höfner
(86) Internationale Anmeldenummer: PCT/EP2003/009209
(87) Internationale Veröffentlichungsnummer: WO 2004/034407

(56) Entgegenhaltungen:
- US-A- 5 178 825
- US-A- 5 253 278
- US-A- 5 267 291
- PATENT ABSTRACTS OF JAPAN vol. 2000, no. 10, 17. November 2000 (2000-11-17) & JP 2000 193774 A (HITACHI LTD;HITACHI ENG CO LTD), 14. Juli 2000 (2000-07-14) & US 6 516 043 A (CHAKI ET AL.) 4. Februar 2003 (2003-02-04)

## Beschreibung

Die Erfindung betrifft ein Brennelement eines Siedewasserreaktors. Ein solches Brennelement umfasst einen von Abstandhaltern lateral gehaltenes und von einem Brennelementkasten umfasstes Brennstabbündel. An seinem unteren Ende ist ein Fußteil, an seinem oberen Ende ein Kopfteil vorhanden. Zwischen der Außenseite der Abstandhalter und einer Innenseite der Brennelementkästen ist ein Spalt vorhanden, damit auch randständige Brennstäbe im Betrieb mit Kühlwasser versorgt werden können. Von der Außenseite der Abstandhalter stehen Noppen vor. Die Schlüsselweite eines solchen Abstandhalters, d.h. dessen über die Noppen gemessene Breite, ist geringer als die lichte Weite des Brennelementkastens. Aus Gründen der Neutronenökonomie sind Brennstäbe, Abstandhalter und der Brennelementkasten aus Zirkoniumlegierungen gefertigt. Bauteile aus Zirkoniumlegierungen, deren Texturfaktor von 0,33 abweichen, zeigen im Reaktorbetrieb ein Wachstum entsprechend der Textur . (z.B. durch Bestrahlung mit Neutronen, Korrosionseinflusse etc.), was sich bei Abstandhaltern so auswirkt, dass sich ihre Schlüsselweite während des Einsatzes im Reaktor vergrößert. Um im Servicefall eine problemlose Demontage zu ermöglichen, wird das neutronenbedingte Wachstum durch eine entsprechend verringerte Schlüsselweite der Abstandhalter kompensiert. Bei einem neuen Brennelement ist somit zwischen dem Brennelementkasten und den Brennstäben bzw. den Abstandhaltern eines Brennstabbündels ein relativ großer Spalt vorhanden. Hinzu kommt, dass sich die entfernt von Fuß- und Kopfteil befindlichen mittleren Bereiche des Brennelementkastens bei den während des Betriebes herrschenden Temperaturen und Drücken bleibend aufweiten, was auf ein strahlungsinduziertes Kriechen des Zirkoniummaterials _ zurückzuführen ist. Der im Einbauzustand zwischen den Abstandhaltern und einer Innenseite des Brennelementkastens vorhandene Spalt wird daher im Betrieb zunächst noch größer. Ein Brennelement kann sich somit beispielsweise aufgrund unterschiedlicher Strömungsverhältnisse seitlich durchbiegen und sich dadurch einer Innenseite des Brennelementkastens nähern, wodurch der dieser Innenseite zugeordnete Spalt verkleinert, der gegenüberliegende Spalt jedoch vergrößert wird. Die Folge ist eine Veränderung der thermohydraulischen Verhältnisse im Bereich der betreffenden randständigen Brennstäbe. Bei einem aus US 5,267, 291 bekannten Brennelement soll dies wie folgt verhindert werden: An zwei aneinander grenzenden Randstegen der Abstandhalter sind Noppen vorhanden, die weniger weit aus deren Außenseite vorstehen als die Noppen der jeweils anderen beiden Randstege. Zusätzlich sind an der Außenseite der erstgenannten Randstege Federelemente angebracht, die sich am Brennelementkasten abstützen und das Brennelement darin zentrieren. Dementsprechend haben die oben erwähnten Spalte alle die gleiche Breite.

Davon ausgehend ist es die Aufgabe der Erfindung, ein alternativ gestaltetes Brennelement vorzuschlagen, das eine definierte Lagerung in einem Brennelementkasten gewährleistet und das in thermohydraulischer Hinsicht verbessert ist.

Diese Aufgabe wird nach Anspruch 1 dadurch gelöst, dass ein Abstandhalter von einer auf ihn bzw. auf ein Brennelement seitlich wirkenden Kraft derart in einer außermittigen Lage gehalten ist, dass der äußere Spalt, der zwischen einer der Außenseite einer Kernzelle zugeordneten Außenseite des Abstandhalters und dem Brennelementkasten vorhanden ist, enger ist als ein diesem gegenüberliegender, dem Zentrum bzw. einem dort vorhandenen Steuerelement zugewandter Spalt. Auf diese weise ist gewährleistet, dass im Bereich eines Abstandhalters definierte und voraus berechenbare Spalte vorhanden sind, die sich während des Reaktorbetriebs nicht unvorhersehbar verändern.

Eine Kernzelle ist eine Anordnung von vier Brennelementen zwischen denen ein im Querschnitt kreuzförmiges Steuerelement angeordnet ist. Die dem Steuerelement benachbarten Brennstäbe weisen wegen der dort höheren Wasser- bzw. Moderatormenge eine höhere Leistungsdichte auf als die der Außenseite einer Kernzelle zugeordneten Brennstäbe. Sie sind daher üblicherweise niedriger angereichert als die außenseitigen Brennstäbe. Durch die erfindungsgemäße außermittige Lage eines Brennelements im Brennelementkasten wird im Bereich eines inneren Spaltes die Kühlung durch Vergrößerung des Kühlquerschnittes verbessert und somit der Abstand zur Siedeübergangsleistung (MASL) vergrößert. Bei den außenliegenden Brennstäben niedrigerer Leistungsdichte tritt zwar eine Verringerung des Kühlmitteldurchsatzes ein, was aber durch eine optimierte Anreicherungsverteilung kompensiert werden kann.

Die Kraft, die ein Brennelementbündel in seiner außermittigen Lage hält, wird vorzugsweise durch Federelemente aufgebracht. Denkbar ist jedoch auch, dass die Kraft durch strömungsbedingte Druckunterschiede erzeugt wird. Bei einer bevorzugten Ausführungsform sind die Federelemente an einer einem inneren Spalt zugeordneten Außenseite des Abstandhalters vorgesehen. Dadurch ist gewährleistet, dass sich dieser mit seiner gegenüberliegenden Außenseite dem Brennelementkasten weiter nähern kann, als wenn dort Federelemente - etwa wie bei einem Brennelement gemäß US 5,267,291, angeordnet wären.

Die Erfindung wird nun anhand der beigefügten Zeichnungen näher erläutert:

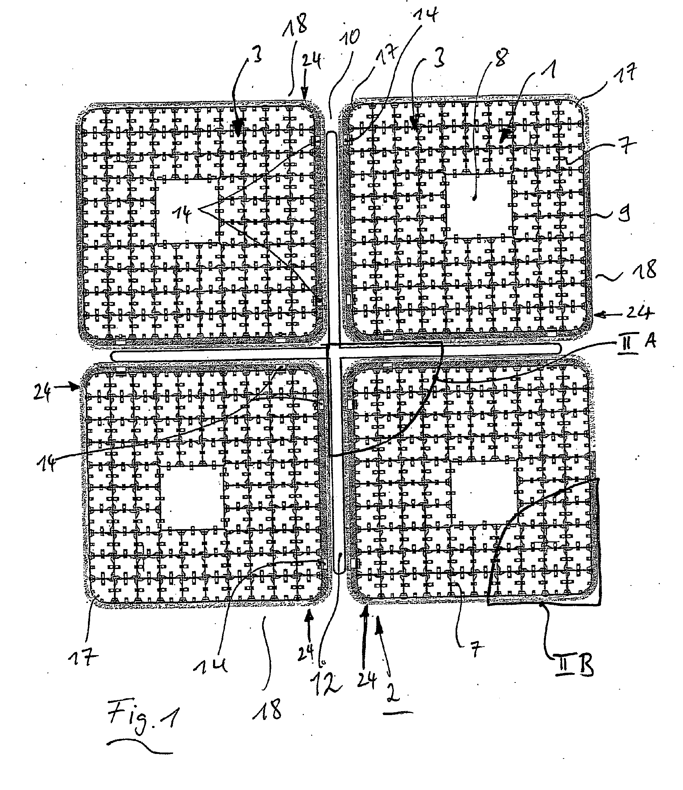

- Fig. 1: eine Draufsicht auf eine vier Brennelemente und ein Steuerelement umfassende Kernzelle,

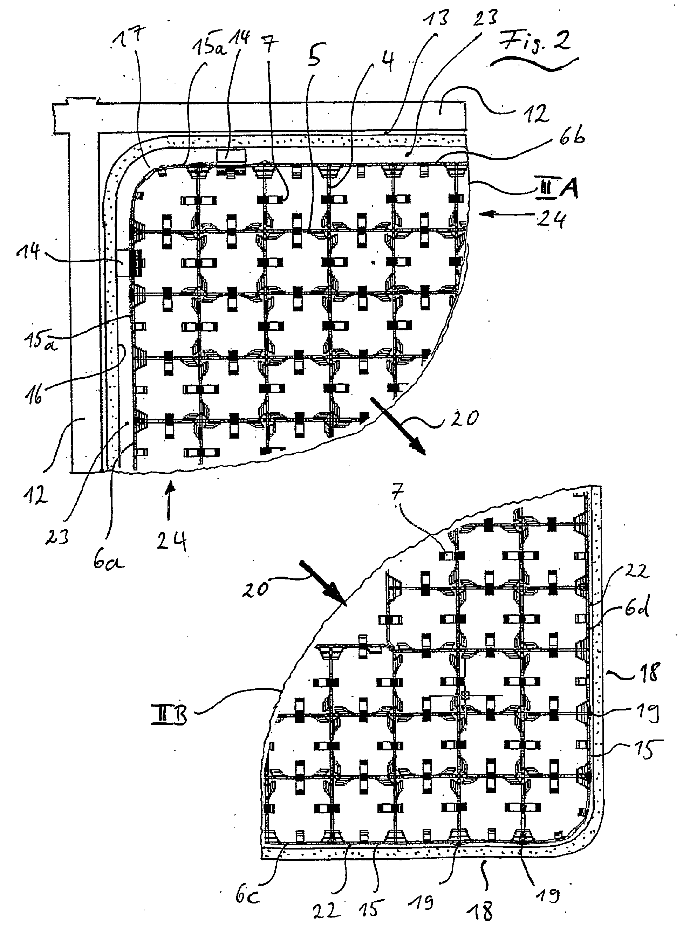

- Fig. 2: die Details IIA und IIB aus Fig.1.

Im Druckbehälter eines Siedewasserreaktors sind jeweils Gruppen von vier Brennelementen 1 zu einer Kernzelle 2 zusammengefasst. In den Abbildungen sind aus zeichnerischen Gründen nur die Abstandhalter 3 eines Brennstabbündels dargestellt, Wasserkanal und Brennstäbe wurden weggelassen. Die Bauform eines Abstandhalters ist prinzipiell beliebig. Bei dem gezeigten Ausführungsbeispiel jedoch setzt sich ein Abstandhalter (3) aus ineinander gesteckten Längs- und Querstegen 4,5 und diese umfassenden Randstegen 6a-d zusammen. An den Längs- und Querstegen 4, 5 sind zur Halterung von Brennstäben dienende Federelemente 7 vorhanden. Ein Abstandhalter 3 weist außerdem eine außermittig angeordnete Öffnung 8 auf, die von einem Wasserkanal durchgriffen ist. Ein Brennstabbündel mit seinen Abstandhaltern 3 ist von einem Brennelementkasten 9 umfasst. Die Brennstabbündel einer Kernzelle 2 sind so angeordnet, dass ihre Mittelpunkte bzw. die Mittelpunkte der ihnen jeweils zugeordneten Abstandhalter 3 etwa auf den Ecken eines Quadrates liegen. Zwischen den Brennstabbündeln bzw. den sich auf gleichem Höhenniveau befindlichen Abstandhaltern 3 ist ein Zwischenraum 10 vorhanden, der ein im Querschnitt kreuzförmiges Steuerelement 12 aufnimmt. Zwischen dem Steuerelement 12 und einem an ihn angrenzenden Brennelementkasten 9 ist ein Spaltraum 13 vorhanden. Die inneren bzw. die dem Steuerelement 12 benachbarten Randstege 6a, 6b sind mit beispielsweise zwei Federelementen 14 versehen, die sich von der Außenseite 15a der Randstege 6a, 6b weg erstrecken. Die Federelemente 14 stützen sich an der Innenseite 16 des Brennelementkastens 9 ab. Die beiden Federelemente 14 eines Randsteges 6a, 6b sind jeweils nahe einer Ecke 17 eines Abstandhalters 3 angeordnet. An den beiden anderen Randstegen 6c, 6d, welche der Außenseite 18 einer Kernzelle zugeordnet sind, sind keine Federelemente sondern nur außenseitige Noppen 19 vorhanden. Die Federelemente 14 drücken den Abstandhalter 3 jeweils mit einer sich quer zum entsprechenden Randsteg 6a, 6b erstreckenden Kraft von der Innenseite 16 des Brennelementkastens 9 weg. Daraus resultiert eine in Richtung des Pfeiles 20 diagonal auf einen Abstandhalter 3 einwirkende Kraftkomponente. Die Folge dieser Krafteinwirkung ist, dass die federelementfreien Randstege 6c, 6d mit ihren Noppen 19 gegen die Innenseite 16 des Brennelementkastens 9 gedrückt werden. Auf Grund der Noppen, die aus der Außenseite der Randstege 6c, 6d vorspringen, ist zwischen diesen und dem Brennelementkasten ein enger Spaltraum 22 vorhanden. Demgegenüber ist der Spaltraum 23 zwischen den äußeren Randstegen 6a, 6b und dem Brennelementkasten 9 wesentlich größer. Gegenüber einer mittigen Anordndung eines Abstandhalters im Brennelementkasten 9, verwirklicht etwa durch um den Umfang des Abstandhalters 3 verteilte Federelemente, ist bei der erfindungsgemäßen Ausgestaltung am Ort größerer Leistungsdichte, also etwa den dem Steuerelement 12 unmittelbar benachbarten Brennstabreihen 24 ein größerer Spaltraum 23 und damit eine verstärkte Kühlung vorhanden.

### Bezugszeichenliste

- 1: Brennelement
- 2: Kernzelle
- 3: Abstandhalter
- 4: Längssteg
- 5: Quersteg
- 6a-d: Randsteg
- 7: Federelement
- 8: Öffnung
- 9: Brennelementkasten
- 10: Zwischenraum
- 12: Steuerelement
- 13: Spaltraum
- 14: Federelement
- 15: Außenseite
- 16: Innenseite
- 17: Ecke
- 18: Außenseite
- 19: Noppe
- 20: Pfeil
- 22: Spalt
- 23: Spalt
- 24: Brennstabreihe

## Patentansprüche

1. Kernzelle (2) eines Siedewasserreaktors, mit vier Brennelementen (1), die ein von Abstandhaltern (3) lateral gehaltenes und von einem Brennelementkasten (9) umfasstes Brennstabbündel aufweisen, wobei von den Außenwänden.(15) eines Abstandhalters (3) Noppen (19) vorstehen, die einen Minimalspalt zwischen der jeweiligen Außenseite (15) eines Abstandhalters (3) und dem Brennelementkasten (9) gewährleisten, und wobei die über die Noppen gemessene Breite eines Abstandhalters (3) kleiner ist als die lichte Weite des Brennelementkastens (9),
**dadurch gekennzeichnet,**
**dass** ein Abstandhalter (3) von Federelementen (14) derart in einer außermittigen Lage im Brennelementkasten angeordnet ist, dass ein äußerer Spalt (22), der zwischen einer der Außenseite (18) der Kernzelle (2) zugeordneten Außenseite (15) des Abstandhalters (3) und dem Brennelementkasten (9) vorhanden ist, enger ist als ein diesem gegenüberliegender, dem Zentrum bzw. einem dort vorhandenen Steuerelement (12) zugewandter innerer Spalt (23), wobei die Federelemente (14) an einer einem inneren Spalt (23) zugeordneten Außenseite (15a) des Abstandhalters (3) vorgesehen sind.

2. Kernzelle nach Anspruch 1,
**dadurch gekennzeichnet,**
**dass** beide äußeren Spalte (22) enger sind als die inneren Spalte (23).

3. Brennelement (1) eines Siedewasserreaktors, mit einem von Abstandhaltern (3) lateral gehaltenen und von einem Brennelementkasten (9) umfassten Brennstabbündel, wobei von den Außenwänden (15) eines Abstandhalters (3) Noppen (19) vorstehen, die einen Minimalspalt zwischen der jeweiligen Außenseite (15) eines Abstandhalters (3) und dem Brennelementkasten (9) gewährleisten, und wobei die über die Noppen gemessene Breite eines Abstandhalters (3) kleiner ist als die lichte Weite des Brennelementkastens (9),
**dadurch gekennzeichnet,**
**dass** ein vier Randstege (6) umfassender Abstandhalter (3) von einem seitlich auf ihn wirkenden Federelement (14)in einer außermittigen Lage derart gehalten ist, dass ein zwischen zwei an einer Ecke (17) aneinander stoßenden Randstegen (6c, 6d) und dem Brennelementkasten (9) vorhandene Spalt (22) enger ist als ein zwischen den zwei anderen Randstegen (6a, 6b) und dem Brennelementkasten (9) vorhandene Spalt (23), wobei die Federelemente (14) an den dem weiteren Spalt (23) zugeordneten Randstegen (6a, 6b) angeordnet sind.

4. Brennelement nach Anspruch 3,
**dadurch gekennzeichnet,**
**dass** beide äußeren Spalte (22) enger sind als die inneren Spalte (23).

## Claims

1. Core cell (2) of a boiling-water reactor, having four fuel assemblies (1) having a bundle of fuel- rods which is laterally held by spacers (3) and surrounded by a fuel assembly channel (9), wherein lugs (19) project from the outside walls (15) of a spacer (3), which lugs ensure a minimum gap between the respective outside (15) of a spacer (3) and the fuel assembly channel (9), and wherein the width, which is measured over the lugs, of a spacer (3) is smaller than the clear width of the fuel assembly channel (9), **characterized in that** the spacer (3) is disposed by spring elements (14) in an eccentric position in the fuel assembly channel such that an outer gap (22) between an outside (15) of the spacer (3), which is assigned to the outside (18) of the core cell (2), and the fuel assembly channel (9) is narrower than an inner gap (23) which is located opposite the former and faces the centre or a control element (12) located there, wherein the spring elements (14) are provided on an outside (15a) of the spacer (3), which is assigned to an inner gap (23).

2. Core cell according to Claim 1, **characterized in that** both outer gaps (22) are narrower than the inner gaps (23).

3. Fuel assembly (1) of a boiling-water reactor, having a bundle of fuel rods which is laterally held by spacers (3) and surrounded by a fuel assembly channel (9), wherein lugs (19) project from the outside walls (15) of a spacer (3), which lugs ensure a minimum gap between the respective outside (15) of a spacer (3) and the fuel assembly channel (9), and wherein the width, which is measured over the lugs, of a spacer (3) is smaller than the clear width of the fuel assembly channel (9), **characterized in that** a spacer (3), which comprises four edge webs (6), is held in an eccentric position by a spring element (14) which acts laterally on it such that a gap (22) between two edge webs (6c, 6d), which abut at a corner (17), and the fuel assembly channel (9) is narrower than a gap (23) between the other two edge webs (6a, 6b) and the fuel assembly channel (9), wherein the spring elements (14) are arranged on the edge webs (6a, 6b) which are assigned to the other gap (23).

4. Fuel assembly according to Claim 3, **characterized in that** both outer gaps (22) are narrower than the inner gaps (23).

## Revendications

1. Cellule centrale (2) d'un réacteur à eau bouillante, avec quatre éléments combustibles (1) comportant un faisceau de crayons combustibles maintenu latéralement par des écarteurs (3) et entouré d'un caisson d'éléments combustibles (9), des noppes (19) assurant un espace minimal entre la face extérieure concernée (15) d'un écarteur (3) et le caisson d'éléments combustibles (9) saillant à partir des faces extérieures (15) d'un écarteur (3) et la largeur d'un écarteur (3) mesurée par dessus les noppes étant inférieure à la largeur intérieure du caisson d'éléments de combustible (9),
**caractérisée en ce qu'**
un écarteur (3) est placé par des éléments à ressort (14) dans une position excentrée dans le caisson d'éléments combustibles, de telle sorte qu'un interstice extérieur (22) qui est présent entre une face extérieure (15) de l'écarteur (3) qui est associée à la face extérieure (18) de la cellule centrale (2) et le caisson d'éléments combustibles (9) soit plus étroit qu'un interstice intérieur (23) qui lui est opposé et qui fait face au centre ou à un élément de commande (12) qui y est présent, les éléments à ressort (14) étant prévus sur une face extérieure (15a) de l'écarteur (3) qui est associée à un interstice intérieur (23).

2. Cellule centrale selon la revendication 1, '
**caractérisée en ce que**
les deux interstices extérieurs (22) sont plus étroits que les interstices intérieurs (23).

3. Elément combustible (1) d'un réacteur à eau bouillante, avec un faisceau de crayons combustibles maintenu latéralement par des écarteurs (3) et entouré d'un caisson d'éléments combustibles (9), des noppes (19) assurant un espace minimal entre la face extérieure concernée (15) d'un écarteur (3) et le caisson d'éléments combustibles (9) saillant à partir des faces extérieures (15) d'un écarteur (3) et la largeur d'un écarteur (3) mesurée par dessus les noppes étant inférieure à la largeur intérieure du caisson d'éléments combustibles (9)
**caractérisé en ce qu'**
un écarteur (3) comprenant quatre listels de bordure (6) est maintenu par un élément à ressort (14) agissant latéralement sur lui dans une position excentrée de telle sorte qu'un interstice (22) présent entre deux listels de bordure (6c, 6d) adjacents sur un angle (17) et le caisson d'éléments combustibles (9) soit plus étroit qu'un interstice (23) présent entre les deux autres listels de bordure (6a, 6b) et le caisson d'éléments combustibles (9), les éléments à ressort (14) étant disposés sur les listels de bordure (6a, 6b) associés à l'interstice supplémentaire (23).

4. Elément combustible selon la revendication 3,
**caractérisé en ce que**
les deux interstices extérieurs (22) sont plus étroits que les interstices intérieurs (23).
